# EUROPÄISCHE PATENTSCHRIFT

(11) **EP 3 880 992 B1**
(45) Veröffentlichungstag und Bekanntmachung des Hinweises auf die Patenterteilung: **14.12.2022**
(21) Anmeldenummer: 19773403.1
(22) Anmeldetag: 19.09.2019
(51) Int. Cl.: F16J 9/20, F02F 3/00, F02F 3/22, F16J 1/09

(54) **KOLBEN UND ZYLINDER EINER BRENNKRAFTMASCHINE**
PISTON AND CYLINDER OF AN INTERNAL COMBUSTION ENGINE
PISTON ET CYLINDRE D'UN MOTEUR À COMBUSTION INTERNE

(30) Priorität: 14.11.2018 DE 102018128564
(43) Veröffentlichungstag der Anmeldung: 22.09.2021
(73) Patentinhaber: MAN Energy Solutions SE, 86153 Augsburg (DE)
(72) Erfinder: SHAER, Talat, 86153 Augsburg (DE); WALDENMAIER, Ulf, 86453 Dasing (DE)
(86) Internationale Anmeldenummer: PCT/EP2019/075169
(87) Internationale Veröffentlichungsnummer: WO 2020/099001

(56) Entgegenhaltungen:
- AT-B- 208 657
- DE-A1-102017 213 896
- DE-C- 884 586
- DE-C- 967 095
- JP-U- H0 564 567
- US-A- 1 767 164

## Beschreibung

Die Erfindung betrifft einen Kolben einer Brennkraftmaschine. Des Weiteren betrifft die Erfindung einen Zylinder einer Brennkraftmaschine Ein Zylinder einer Brennkraftmaschine verfügt über einen Kolben, der in einer Zylinderlaufbuchse auf und ab bewegbar geführt ist. Der grundsätzliche Aufbau eines Kolbens, der über eine Pleuelstange an eine Kurbelwelle der Brennkraftmaschine gekoppelt ist, ist dem hier angesprochenen Fachmann geläufig. So verfügt ein Kolben über einen Kolbenschaft, durch den sich ein Kolbenbolzen zur Anbindung des Kolbens an die jeweilige Pleuelstange erstreckt. An einer Seite des Kolbenschafts ist eine Ringpartie des Kolbens positioniert, wobei die Ringpartie des Kolbens mehrere durch Ringstege begrenzte und durch die Ringstege voneinander getrennte Ringnuten zur Aufnahme von Kolbenringen aufweist. Kolben eines Zylinders einer Brennkraftmaschine sind bekannt aus DE884586 C, sowie der nachveröffentlichten DE102017213896 A1.

In Umfangsrichtung des Kolbens gesehen weist der Kolben definierte Umfangspositionen auf, nämlich eine sogenannte Druckseite und eine sogenannte Gegendruckseite. Bei der Bewegung des Kolbens in der Zylinderlaufbuchse wird der Kolben über den Gasdruck nahe einem oberen Totpunkt gegen eine Zylinderwand der Zylinderlaufbuchse gedrückt, wobei diese Umfangsposition als Druckseite bezeichnet wird. An der diametral gegenüberliegenden Seite ist die sogenannte Gegendruckseite ausgebildet. Durch die Druckseite und Gegendruckseite kann eine Gerade gezogen werden, wobei eine senkrecht zu dieser Geraden verlaufende Gerade parallel zum Kolbenbolzen verläuft, welcher der Anbindung des Kolbens an die jeweilige Pleuelstange dient. Auf dieser Geraden, die parallel zum Kolbenbolzen verläuft, liegt eine sogenannte Kupplungsseite und eine sogenannte Kupplungsgegenseite des Kolbens, die der Kupplungsseite diametral gegenüberliegt.

Die DE 884 586 B offenbart einen Kolben einer Brennkraftmaschine in Monoblockbauweise. Kolbenschaft und Ringpartie sind dabei integral an einer monolithischen Baugruppe ausgeführt. Zwischen dem Kolbenschaft und der Ringpartie ist dabei gemäß diesem Stand der Technik in Axialrichtung gesehen eine Ölsammelrinne ausgebildet, in welcher abgestreiftes Öl gesammelt werden kann. Dies Ölsammelrinne verfügt dabei in Axialrichtung gesehen über eine in Umfangsrichtung konstante axiale Tiefe und über eine in Radialrichtung gesehen konstante Breite.

Durch im Betrieb auf den Kolben wirkende Kolbenseitenkräfte wird der Kolben im Bereich des oberen Totpunkts mit großer Kraft gegen die Zylinderlaufbuchse gedrückt, also im Bereich der Druckseite des Kolbens. Dann, wenn zur Schmierung bzw. Kühlung des Kolbens zu wenig Öl vorliegt, kann es hierbei zu einem metallischen Kontakt zwischen dem Kolben und der Zylinderlaufbuchse kommen, wodurch sogenannte Anreiber und/oder Fresser verursacht werden können. Hierdurch kann der Zylinder beschädigt werden. Es besteht Bedarf an einem Kolben bzw. einem Zylinder einer Brennkraftmaschine mit einem Kolben, bei welchem die Beschädigungsgefahr reduziert ist.

Hiervon ausgehend liegt der Erfindung die Aufgabe zu Grunde, einen neuartigen Kolben und Zylinder einer Brennkraftmaschine zu schaffen. Diese Aufgabe wird durch einen Kolben einer Brennkraftmaschine gemäß Anspruch 1 gelöst. Erfindungsgemäß weist die Ölsammlerinne an der Umfangsposition der Druckseite des Kolbens und/oder an der Umfangsposition der Gegendruckseite des Kolbens in Axialrichtung des Kolbens gesehen eine größere Tiefe auf als an der Umfangsposition der Kupplungsseite des Kolbens und/oder an der Umfangsposition der Kupplungsgegenseite des Kolbens. Die Ölsammlerinne weist ferner in Umfangsrichtung des Kolbens gesehen ein Gefälle auf, nämlich ausgehend von der axialen Tiefe im Bereich der Kupplungsseite und/oder der Kupplungsgegenseite in Richtung auf die axiale Tiefe im Bereich der Druckseite und/oder der Gegendruckseite.

Über die erfindungsgemäß ausgestaltete Ölsammelrinne mit den in Axialrichtung definiert unterschiedlichen Tiefen an Gegendruckseite, Druckseite, Kupplungsseite und/oder Kupplungsgegenseite kann bei einem Abwärtshub des Kolbens etwa ab der Mitte der Abwärtsbewegung des Kolbens in Richtung auf den unteren Totpunkt Öl gesammelt werden, und zwar im Bereich der Kupplungsseite sowie Kupplungsgegenseite der Ölsammelrinne. Dieses angesammelte Öl fließt aufgrund des Gefälles in der Ölsammelrinne in Richtung auf die Druckseite und vorzugsweise Gegendruckseite des Kolbens, wobei dieses gesammelte Öl dann bei einer Aufwärtsbewegung des Kolbens ab der Mitte der Aufwärtsbewegung bis zum oberen Totpunkt durch Trägheitskräfte in Richtung auf die Ringpartie des Kolbens und die Zylinderlaufbuchse spritzt und dann hier zur Schmierung zur Verfügung steht. Der Zylinder wird demnach im Bereich seines oberen Totpunkts im Bereich der Druckseite und vorzugsweise Gegendruckseite mit Schmieröl versorgt, sodass die Gefahr eines sogenannten Anreibers oder Fressers verringert ist. Die Beschädigungsgefahr für den Kolben ist demnach reduziert.

Vorzugsweise beträgt die axiale Tiefe der Ölsammlerinne an der Umfangsposition der Druckseite und vorzugsweise an der Umfangsposition der Gegendruckseite zwischen 4 mm und 30 mm, bevorzugt zwischen 6 mm und 20 mm. Die axiale Tiefe der Ölsammlerinne an der Umfangsposition der Kupplungsgegenseite und vorzugsweise an der Umfangsposition der Kupplungsseite, die stets kleiner als die axiale Tiefe an der Umfangsposition der Druckseite und vorzugsweise Gegendruckseite ist, beträgt zwischen 2 mm und 15 mm, bevorzugt zwischen 3 mm und 10 mm. Eine derartige Dimensionierung der Ölsammelrinne ist besonders bevorzugt, um bei der Abwärtsbewegung des Kolbens Öl im Bereich der Ölsammelrinne zu sammeln und im Bereich der Aufwärtsbewegung wieder abzugeben.

Vorzugsweise ist in Axialrichtung des Kolbens gesehen zwischen der Ölsammlerinne und der Ringpartie eine der Ölsammlerinne zugwandte Steuerkante ausgebildet, die mit der Axialrichtung einen Winkel einschließt. Über die Steuerkante kann das Sammeln des Öls sowie Abgeben des Öls gezielt beeinflusst werden.

Vorzugsweise ändert sich der Winkel, den die Steuerkante mit der Axialrichtung einschließt, in Umfangsrichtung des Kolbens. Hierdurch können dann im Bereich von Gegendruckseite, Druckseite, Kupplungsseite und/oder Kupplungsgegenseite individuelle Winkel eingestellt werden, um das Sammeln des Öls sowie Abgeben des Öls individuell zu beeinflussen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen ausschnittweisen Querschnitt durch einen erfindungsgemäßen Kolben in einer sich durch Kupplungsseite und Kupplungsgegenseite erstreckenden Schnittrichtung bei gebauter Ausführung des Kolbens;
- Fig. 2: einen Ausschnitt aus Fig. 1 beim Abwärtshub des Kolbens;
- Fig. 3: einen ausschnittweisen Querschnitt durch den erfindungsgemäßen Kolben der Fig. 1, 2 in einer sich durch Druckseite und Gegendruckseite erstreckenden Schnittrichtung;
- Fig. 4: ein Ausschnitt aus Fig. 3 beim Aufwärtshub des Kolbens;
- Fig. 5: ein Detail des Kolbens;
- Fig. 6: ein weiteres Detail des Kolbens;
- Fig. 7: einen ausschnittweisen Querschnitt durch einen erfindungsgemäßen Kolben in einer sich durch Kupplungsseite und Kupplungsgegenseite erstreckenden Schnittrichtung bei Monoblockausführung des Kolbens;
- Fig. 8: einen ausschnittweisen Querschnitt durch den erfindungsgemäßen Kolben der Fig. 7 in einer sich durch Druckseite und Gegendruckseite erstreckenden Schnittrichtung.

Die Erfindung betrifft einen Kolben eines Zylinders einer Brennkraftmaschine sowie einen Zylinder einer Brennkraftmaschine mit einem Kolben.

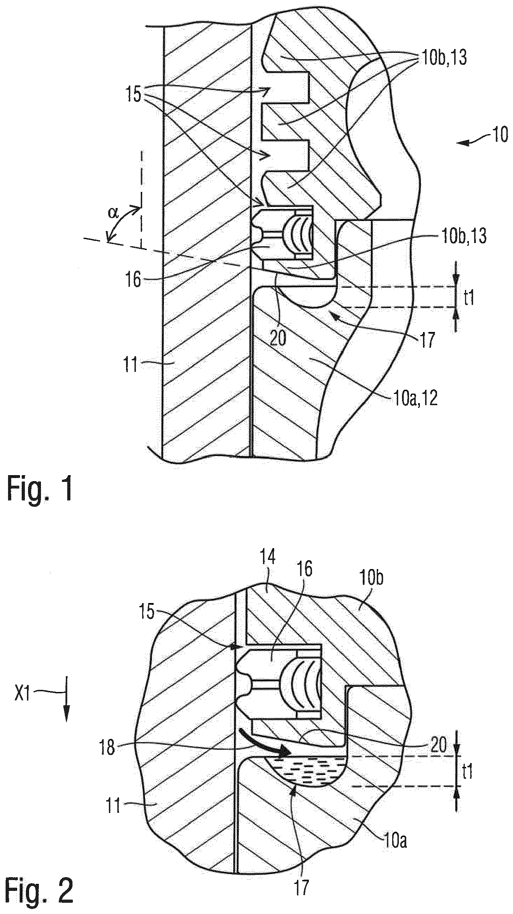

Fig. 1 bis 6 zeigen unterschiedliche Querschnitte und Details eines erfindungsgemäßen Kolbens 10 eines Zylinders einer Brennkraftmaschine, der in einer Laufbuchse 11 auf und ab bewegbar geführt ist. Bei dem Kolben 10 des Ausführungsbeispiels der Fig. 1 bis 6 handelt es sich um einen sogenannten gebauten Kolben aus zwei Kolbenabschnitten10a und 10b, die als getrennten Baugruppen 10a und 10b ausgebildet und miteinander verbunden sind.

Der Kolben 10 des Ausführungsbeispiels der Fig. 1 bis 6 verfügt über einen Kolbenschaft 12, der von der Baugruppe 10a des Kolbens bereitgestellt ist. Durch den Kolbenschaft 12 erstreckt sich ein nicht gezeigter Kolbenbolzen zur Anbindung des Kolbens 10 an eine nicht gezeigte Pleuelstange des jeweiligen Zylinders.

Der Kolben 10 verfügt weiterhin über eine Ringpartie 13, die von der Baugruppe 10b des Kolbens 10 bereitgestellt ist. Die Ringpartie 13 ist an einer axialen Seite des Kolbenschafts 12 gegenüberliegend zur Pleuelstange angeordnet.

Die Ringpartie 13 verfügt über mehrere durch Ringstege 14 begrenzte und durch die Ringstege 14 voneinander beabstandete Ringnuten 15. In den Ringnuten 15 sind Kolbenringe 16 angeordnet, die entweder als Verdichterring oder als Ölabstreifring ausgebildet sind. Für den Kolben 10 der Fig. 1 bis 6 ist ein derartiger Kolbenring 16 gezeigt.

Der Kolben verfügt über eine Ölsammelrinne 17. Die Ölsammelrinne 17 ist in Axialrichtung des Kolbens 10 gesehen zwischen dem Kolbenschaft 12 und der Ringpartie 13 ausgebildet, also in Axialrichtung gesehen zwischen dem Kolbenschaft 12 und der Ringpartie 13 positioniert.

Die Ölsammelrinne 17 läuft in Umfangsrichtung des Kolbens 10 um den Kolben 10 um und ist im gezeigten Ausführungsbeispiel von der Baugruppe 10a des Kobens 10 ausgebildet.

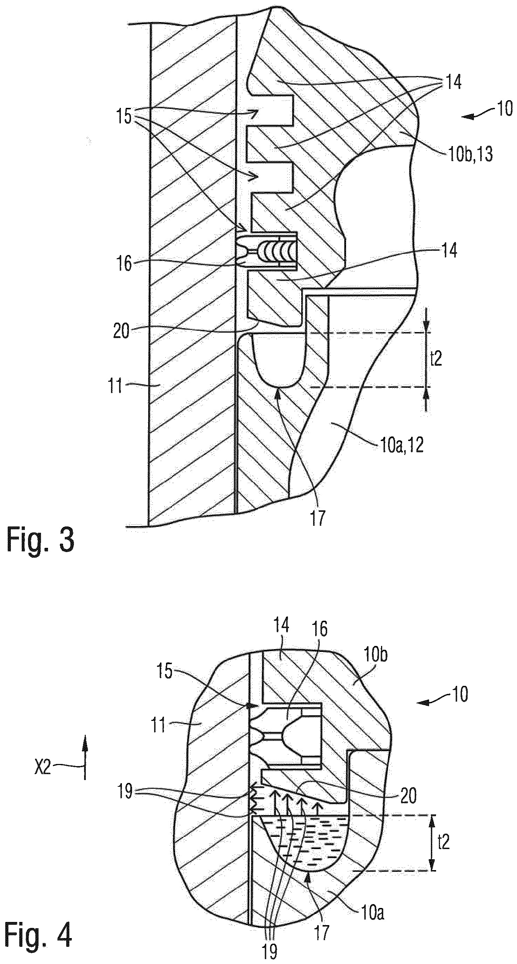

Wie einem Vergleich der Fig. 1, 2 mit den Fig. 3, 4 entnommen werden kann, ist die axiale Tiefe t dieser Ölsammelrinne 17 in Umfangsrichtung gesehen nicht konstant, vielmehr weist die Ölsammelrinne 17 an der Umfangsposition der Druckseite des Kolbens 10 und vorzugsweise auch an der Umfangsposition der Gegendruckseite des Kolbens 10 (siehe Fig. 3 und 4), in Axialrichtung des Kolbens 10 gesehen, eine größere axiale Tiefe t2 auf, als der Kolben 10 eine Tiefe t1 an der Umfangsposition der Kupplungsseite desselben und an der Umfangsposition der Kupplungsgegenseite desselben (siehe Fig. 1, 2) aufweist.

Wie bereits ausgeführt, liegen Kupplungsseite und Kupplungsgegenseite des Kolbens auf einer Geraden, die parallel zur Achse des Kolbenbolzens verläuft. Druckseite und Gegendruckseite des Kolbens 10 liegen auf einer Geraden, die senkrecht zum Kolbenbolzen verläuft.

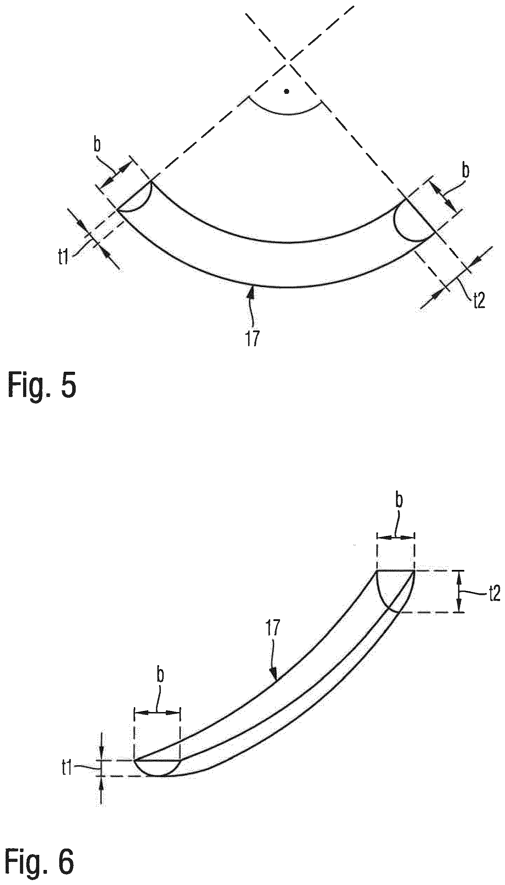

Der 90°-Versatz zwischen der relativ geringen Tiefe t1 der Ölsammelrinne 17 an der Umfangsposition der Kupplungsseite und an der Umfangsposition der Kupplungsgegenseite zu der relativ großen Tiefe t2 der Ölsammelrinne 17 an der Umfangsposition der Druckseite sowie an der Umfangsposition der Gegendruckseite ergibt sich auch aus Fig. 5.

Während die axiale Tiefe t der Ölsammelrinne 17 sich in Umfangsrichtung des Kobens ändert, ist die radiale Breite b der Ölsammelrinne 17 vorzugsweise in Umfangsrichtung konstant.

Die Ölsammelrinne 17 verfügt nicht nur über die unterschiedlichen Tiefen an Druckseite, Gegendruckseite und Kupplungsseite, Gegenkupplungsseite, vielmehr weist die Ölsammelrinne 17 auch ein Gefälle auf, nämlich ausgehend von der relativ geringen axialen Tiefe t1 im Bereich der Kupplungsseite und Gegenkupplungsseite in Richtung auf die relativ große axiale Tiefe t2 im Bereich der Druckseite und Gegendruckseite. Hierdurch kann sichergestellt werden, dass Öl, welches im Bereich der Kupplungsseite und Gegenkupplungsseite im Bereich der Ölsammelrinne 17 gesammelt wird, in Richtung auf die Druckseite sowie Gegendruckseite des Kolbens 10 bzw. der Ölsammelrinne 17 ablaufen und sich dort sammeln kann.

Fig. 2 zeigt ein Detail des Kolbens 10 bei einer Abwärtsbewegung desselben, also bei einem Abwärtshub (Pfeil X1), ausgehend vom oberen Totpunkt in Richtung auf den unteren Totpunkt, wobei in etwa ab der Mitte dieser Abwärtsbewegung bis zum unteren Totpunkt Öl im Bereich der Kupplungsseite sowie Gegenkupplungsseite gesammelt und in die Ölsammelrinne 17 gelangt. Ein Pfeil 18 visualisiert dieses Ölsammeln bei der Abwärtsbewegung des Kolbens 10 ab der Mitte der Abwärtsbewegung bis zum unteren Totpunkt.

Wie bereits ausgeführt, strömt das Öl in Folge des Gefälles der der Ölsammelrinne 17 in der der Ölsammelrinne 17 ausgehend von der Kupplungsseite und Kupplungsgegenseite in Richtung auf die Druckseite und Gegendruckseite. Das Gefälle der Ölsammelrinne 17 ausgehend von der Kupplungsseite und Kupplungsgegenseite in Richtung auf die Druckseite und Gegendruckseite ist vorzugsweise stetig, also ohne Stufen oder Absätze.

Fig. 4 visualisiert ein Detail der Ölsammelrinne 17 im Bereich der Druckseite bei einem Aufwärtshub (Pfeil X2) des Kolbens 10, also bei einer Bewegung desselben ausgehend vom unteren Totpunkt in den Bereich des oberen Totpunkts, wobei in etwa ab der Mitte dieses Aufwärtshubs bis zum oberen Totpunkt gemäß den Pfeilen 19 der Fig. 4 Öl aus der Ölsammelrinne 17 im Bereich der Druckseite und Gegendruckseite in Richtung auf die Zylinderlaufbuchse 11 gerichtet wird.

Hierdurch kann eine optimale Schmierung des Kolbens im Bereich des oberen Totpunkts selbst bei Vorliegen großer Kupplungsseitenkräfte realisiert werden, sodass ein metallischer Kontakt zwischen Kolben 10 und Laufbuchse 11 vermieden und die Gefahr eines Kolbenanreibers oder Kolbenfressers verringert bzw. eliminiert werden kann.

Wie bereits ausgeführt, ist die axiale Tiefe t2 der Ölsammelrinne 17 im Bereich der Druckseite und Gegendruckseite des Kolbes 10 größer als die axiale Tiefe t1 der Ölsammelrinne 17 im Bereich der Kupplungsseite und Kupplungsgegenseite des Kolbes 10. Die axiale Tiefe t1 der Ölsammelrinne 17 beträgt dabei an der Umfangsposition der Kupplungsseite sowie Kupplungsgegenseite des Kolbes 10 bevorzugt zwischen 2 mm und 15 mm, besonders bevorzugt zwischen 3 mm und 10 mm. Die axiale Tiefe t2 der Ölsammelrinne an der Umfangsposition der Druckseite und der Gegendruckseite, die größer als die axiale Tiefe t1 ist, beträgt bevorzugt zwischen 4 mm und 30 mm, besonders bevorzugt zwischen 6 mm und 20 mm. Die Breite b in Radialrichtung der Ölsammelrinne 17 beträgt bevorzugt zwischen 2 mm und 25 mm, besonders bevorzugt zwischen 5 mm und 20 mm.

Im gezeigten Ausführungsbeispiel ist in Axialrichtung des Kolbens 10 gesehen zwischen der Ölsammelrinne 17 und der Ringpartie 13 eine Steuerkante 20 ausgebildet, die mit der Axialrichtung einen Winkel α (siehe Fig. 1) einschließt. Diese Steuerkante 20 kann dabei in Umfangsrichtung umlaufend ausgebildet und in Umfangsrichtung umlaufend mit einem konstanten Winkel α ausgestaltet sein. Es ist auch möglich, diese Steuerkante 20 mit einem in Umfangsrichtung veränderlichen Winkel α auszugestalten, der im Bereich von Druckseite, Gegendruckseite und im Bereich von Kupplungsseite, Kupplungsgegenseite unterschiedlich ausgebildet sein kann. Dies ist vorteilhaft, um das Sammeln des Öls sowie Abgeben des Öls individuell zu beeinflussen.

Der Winkel α, den die Steuerkante 20 mit der Axialrichtung einschließt, ist vorzugsweise größer als 0° und kleiner als 90°, bevorzugt liegt dieser Winkel zwischen 45° und 90°, besonders bevorzugt zwischen 60° und 75°.

Das Öl, das bei einem Aufwärtshub des Kolbens 10 aus der Ölsammelrinne 17 im Bereich der Druckseite und Gegendruckseite in Richtung auf die Zylinderlaufbuchse 11 fliegt oder spritzt, gelangt zuerst auf die Steuerkante 20 (siehe Fig. 4) und fliegt oder spritzt von der Steuerkante 20 in Richtung auf die Zylinderlaufbuchse 11.

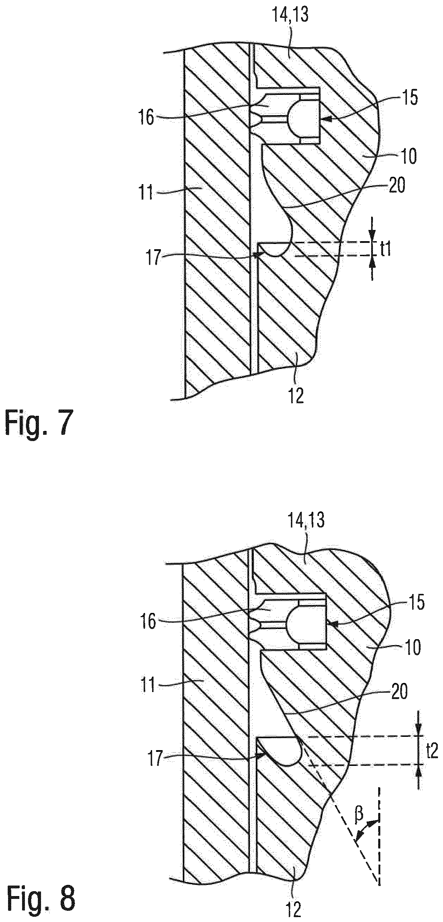

Fig. 7 und 8 zeigen Querschnitte durch einen Kolben 10 nach einem zweiten Ausführungsbeispiel der Erfindung, der sich vom Kolben 10 des Ausführungsbeispiels der Fig. 1 bis 6 im Wesentlichen nur dadurch unterscheidet, dass der Kolben 10 der Fig. 7 und 8 nicht als gebauter Kolben aus zwei zusammengesetzten und miteinander verbundenen Baugruppen 10a, 10b gebildet ist, sondern vielmehr als Monoblockkolben ausgeführt ist, dessen Ringpartie 13 und Kolbenschaft 12 von einer monolithischen Baugruppe gebildet sind. Hinsichtlich der konstruktiven Ausführungsdetails kann für den Kolben 10 der Fig. 7 und 8 auf die Ausführungen zum Kolben 10 der Fig. 1 bis 6 verwiesen werden, wobei bei einem Monoblocckolben der Winkel β, den die Steuerkante 20 mit der Axialrichtung einschließt, ebenfalls vorzugsweise größer als 0° und kleiner als 90° ist und bevorzugt zwischen 30° und 70° beträgt.

Mit der hier vorliegenden Erfindung kann die Schmierung des Kolbens 10 zur Zylinderlaufbuchse 11 verbessert werden, insbesondere im thermisch und mechanisch belasteten Bereich kurz vor und nach dem oberen Totpunkt auf Druckseite und Gegendruckseite des Kolbens 10. Die Gefahr von Anreibern und Fressern des Kolbens kann verhindert werden. Hierbei hat die Ausgestaltung der Ölsammelrinne mit unterschiedlichen Tiefen und dem Gefälle eine erfindungsgemäße Bedeutung.

Beim Abwärtshub kann Öl in der Ölsammelrinne 17 im Bereich von Kupplungsseite und Kupplungsgegenseite gesammelt werden, innerhalb der Ölsammelrinne 17 auf Grundlage des Gefälles in Richtung auf die Druckseite und Gegendruckseite strömen, dort gesammelt werden und beim Aufwärtshub in Richtung auf den Schmierbereich zwischen Kolben 10 und Zylinderlaufbuchse 11 gerichtet werden. Das Ölsammelverhalten sowie Ölabgabeverhalten kann dabei über den Winkel der Steuerkante 20 abgestimmt werden.

## Patentansprüche

1. Kolben (10) eines Zylinders einer Brennkraftmaschine,
mit einem Kolbenschaft (12),
mit einer an einer ersten axialen Seite des Kolbenschafts (12) positionierten Ringpartie (13), die mehrere durch Ringstege (14) begrenzte und durch die Ringstege (14) voneinander getrennte Ringnuten (15) aufweist, wobei jede der Ringnuten (15) einen als Verdichterring oder als Ölabtreifring ausgebildeten Kolbenring (16) aufnimmt,
mit einer in Axialrichtung des Kolbens gesehen zwischen dem Kolbenschaft (12) und der Ringpartie (13) positionierten Ölsammlerinne (17),
**dadurch gekennzeichnet, dass**
die Ölsammlerinne (17) an der Umfangsposition der Druckseite des Kolbens und/oder an der Umfangsposition der Gegendruckseite des Kolbens in Axialrichtung des Kolbens gesehen eine größere Tiefe aufweist als an der Umfangsposition der Kupplungsseite des Kolbens und/oder an der Umfangsposition der Kupplungsgegenseite des Kolbens,
die Ölsammlerinne (17) in Umfangsrichtung des Kolbens gesehen ein Gefälle aufweist, nämlich ausgehend von der axialen Tiefe im Bereich der Kupplungsseite und/oder der Kupplungsgegenseite in Richtung auf die axiale Tiefe im Bereich der Druckseite und/oder der Gegendruckseite.

2. Kolben nach Anspruch 1, **dadurch gekennzeichnet, dass** die Umfangsposition der Gegendruckseite der Umfangsposition der Druckseite in Umfangsrichtung gesehen um 180° oder in etwa 180° gegenüberliegt.

3. Kolben nach Anspruch 1 oder 2, **dadurch gekennzeichnet, dass** die Umfangsposition der Kupplungsgegenseite der Umfangsposition der Kupplungsseite in Umfangsrichtung gesehen um 180° oder in etwa 180° gegenüberliegt.

4. Kolben nach einem der Ansprüche 1 bis 3, **dadurch gekennzeichnet, dass** die Umfangsposition der Kupplungsgegenseite und die Umfangsposition der Kupplungsseite in Umfangsrichtung gesehen um 90° oder in etwa 90° zur Umfangsposition der Gegendruckseite und der Umfangsposition der Druckseite versetzt sind.

5. Kolben nach einem der Ansprüche 1 bis 3, **dadurch gekennzeichnet, dass**
die axiale Tiefe (t2) der Ölsammlerinne (17) an der Umfangsposition der Druckseite und an der Umfangsposition der Gegendruckseite zwischen 4 mm und 30 mm, bevorzugt zwischen 6 mm und 20 mm beträgt,
die axiale Tiefe (t1) der Ölsammlerinne (17) an der Umfangsposition der Kupplungsgegenseite und an der Umfangsposition der Kupplungsseite zwischen 2 mm und 15 mm, bevorzugt zwischen 3 mm und 10 mm beträgt.

6. Kolben nach einem der Ansprüche 1 bis 5, **dadurch gekennzeichnet, dass** in Radialrichtung gesehen die Breite (b) der Ölsammlerinne (17) zwischen 2 mm und 25 mm, bevorzugt zwischen 5 mm und 20 mm, beträgt.

7. Kolben nach einem der Ansprüche 1 bis 6, **dadurch gekennzeichnet, dass** in Axialrichtung des Kolbens gesehen zwischen der Ölsammlerinne (17) und der Ringpartie (13) eine der Ölsammlerinne (17) zugwandte Steuerkante (20) ausgebildet ist, die mit der Axialrichtung einen Winkel (α, β) einschließt.

8. Kolben nach Anspruch 7, **dadurch gekennzeichnet, dass** bei einem Monoblockkolben, dessen Ringpartie und Kolbenschaft von einer monolithischen Baugruppe gebildet sind, der Winkel (β) zwischen 30° und 70° beträgt.

9. Kolben nach Anspruch 7, **dadurch gekennzeichnet, dass** bei einem bebauten Kolben, dessen Ringpartie (13) und Kolbenschaft (12) von einer getrennten und miteinander verbundenen Baugruppen (10a, 10b) gebildet sind, der Winkel (α) zwischen 60° und 75° beträgt.

10. Kolben nach einem der Ansprüche 7 bis 9, **dadurch gekennzeichnet, dass** sich der Winkel, den die Steuerkante (20) mit der Axialrichtung einschließt, in Umfangsrichtung ändert.

11. Zylinder einer Brennkraftmaschine,
mit einer Zylinderlaufbuchse (11),
mit einem in der Zylinderlaufbuchse (11) auf- und ab bewegbar geführten Kolben (10),
**dadurch gekennzeichnet, dass**
der Kolben (10) nach einem der Ansprüche 1 bis 10 ausgebildet ist.

## Claims

1. A piston (10) of a cylinder of an internal combustion engine,
having a piston shank (12),
having a ring belt (13) positioned on a first axial side of the piston shank (12), which comprises multiple ring grooves (15) delimited by ring lands (14) and separated from one another by the ring lands (14), wherein each of the ring grooves (15) receives a piston ring (16) formed as compression ring or as oil scraper ring,
having an oil collection channel (17) positioned seen in the axial direction of the piston between the piston shank (12) and the ring belt (13),
**characterised in that**
the oil collection channel (17) has a greater depth seen in the axial direction of the piston in the circumferential position of the pressure side of the piston and/or in the circumferential position of the counter-pressure side of the piston than in the circumferential position of the coupling side of the piston and/or in the circumferential position of the coupling counter-side of the piston,
the oil collection channel (17), seen in the circumferential direction of the piston, has an inclination, namely emanating from the axial depth in the region of the coupling side and/or the coupling counter-side in the direction of the axial depth in the region of the pressure side and/or the counter-pressure side.

2. The piston according to Claim 1, **characterised in that** the circumferential position of the counter-pressure side seen in the circumferential direction is located opposite the circumferential position of the pressure side by 180° or approximately 180°.

3. The piston according to Claim 1 or 2, **characterised in that** the circumferential position of the coupling counter-side seen in the circumferential direction is located opposite the circumferential position of the coupling side by 180° or approximately 180°.

4. The piston according to any one of the Claims 1 to 3, **characterised in that** the circumferential position of the coupling counter-side and the circumferential position of the coupling side, seen in the circumferential direction, is offset by 90° or approximately 90° from the circumferential position of the counter-pressure side and the circumferential position of the pressure side.

5. The piston according to any one of the Claims 1 to 3, **characterised in that**
the axial depth (t2) of the oil collection channel (17) in the circumferential position of the pressure side and in the circumferential position of the counter-pressure side amounts to between 4 mm and 30 mm, preferably between 6 mm and 20 mm,
the axial depth (t1) of the oil collection channel (17), in the circumferential position of the coupling counter-side and in the circumferential position of the coupling side, amounts to between 2 mm and 15mm, preferably between 3 mm and 10 mm.

6. The piston according to any one of the Claims 1 to 5, **characterised in that** seen in the radial direction the width (b) of the oil collection channel (17) amounts to between 2 mm and 25 mm, preferably between 5 mm and 20 mm.

7. The piston according to any one of the Claims 1 to 6, **characterised in that** seen in the axial direction of the piston, between the oil collection channel (17) and the ring belt (13), a control edge (10) facing the oil collection channel (17) is formed, which with the axial direction includes an angle (α, β).

8. The piston according to Claim 7, **characterised in that** with a monobloc piston whose ring belt and piston shank are formed by a monolithic assembly, the angle (β) amounts to between 30° and 70°.

9. The piston according to Claim 7, **characterised in that** with a built-up piston, whose ring belt (13) and piston shank (12) are formed by separate assemblies (10a, 10b) connected to one another, the angle (α) amounts to between 60° and 75°.

10. The piston according to any one of the Claims 7 to 9, **characterised in that** the angle included by the control edge (20) with the axial direction changes in the circumferential direction.

11. A cylinder of an internal combustion engine,
having a cylinder liner (11),
having a piston (10) that is guided in the cylinder liner (11) so as to be moveable up and down,
**characterised in that**
the piston (10) is formed according to any one of the Claims 1 to 10.

## Revendications

1. Piston (10) d'un cylindre d'un moteur à combustion interne,
comportant une jupe de piston (12),
comportant une zone de segmentation (13) positionnée sur un premier côté axial de la jupe de piston (12) et comportant une pluralité de rainures annulaires (15) délimitées par des nervures annulaires (14) et séparées les unes des autres par les nervures annulaires (14), dans lequel chacune des rainures annulaires (15) renferme un logement pour un segment de piston (16) réalisé comme un segment de compresseur ou en segment racleur d'huile,
comportant un canal collecteur d'huile (17) positionné entre la tige de piston (12) et la zone de segmentation (13) vue dans la direction axiale du piston, **caractérisé en ce que**
le canal collecteur d'huile (17) présente à la position circonférentielle du côté de pression du piston et/ou à la position circonférentielle du côté de contrepression du piston, vu dans la direction axiale du piston, une plus grande profondeur qu'à la position circonférentielle du côté d'embrayage du piston et/ou à la position circonférentielle du côté opposé à l'embrayage du piston,
le canal collecteur d'huile (17) vu dans la direction circonférentielle du piston présente une pente, à savoir à partir de la profondeur axiale dans la zone du côté d'embrayage et/ou du côté opposé à l'embrayage dans la direction de la profondeur axiale dans la zone du côté de pression et/ou du côté de contrepression.

2. Piston selon la revendication 1, **caractérisé en ce que** la position circonférentielle du côté de contrepression est opposée à la position circonférentielle du côté de pression de 180° ou d'environ 180° vue dans la direction circonférentielle.

3. Piston selon la revendication 1 ou 2, **caractérisé en ce que** la position circonférentielle du côté opposé à l'embrayage est opposée à la position circonférentielle du côté d'embrayage vu dans la direction circonférentielle de 180° ou d'environ 180°.

4. Piston selon une des revendications 1 à 3, **caractérisé en ce que** la position circonférentielle du côté opposé à l'embrayage et la position circonférentielle du côté embrayage vues dans la direction circonférentielle de 90° ou environ 90° par rapport au la position initiale 5 du côté anti-poussée et la position circonférentielle du côté poussée sont décalées.

5. Piston selon une des revendications 1 à 3, **caractérisé en ce que**
la profondeur axiale (t2) du canal collecteur d'huile (17) à la position circonférentielle du côté de pression et à la position circonférentielle du côté de contre-pression est comprise entre 4 mm et 30 mm, de préférence entre 6 mm et 20 mm,
la profondeur axiale (t1) du canal collecteur d'huile (17) à la position circonférentielle du côté opposé à l'embrayage et à la position circonférentielle du côté d'embrayage est comprise entre 2 mm et 15 mm, de préférence entre 3 mm et 10 mm.

6. Piston selon une des revendications 1 à 5, **caractérisé en ce que** vue en direction radiale, la largeur (b) du canal collecteur d'huile (17) est comprise entre 2 mm et 25 mm, de préférence entre 5 mm et 20 mm.

7. Piston selon une des revendications 1 à 6, **caractérisé en ce que** vu dans la direction axiale du piston entre le canal collecteur d'huile (17) et la zone de segmentation (13) une arête de commande (20) tournée vers le canal collecteur d'huile (17) est formée, qui s'étend dans la direction axiale et définit un angle (α, β).

8. Piston selon la revendication 7, **caractérisé en ce que** dans le cas d'un piston monobloc, dont la zone de segmentation et la jupe de piston sont formées par un assemblage monolithique, l'angle (β) est compris entre 30° et 70°.

9. Piston selon la revendication 7, **caractérisé en ce que** dans le cas d'un piston rapporté dont la zone de segmentation (13) et la tige de piston (12) sont formées par un groupe d'assemblage (10a, 10b) distinct et interconnecté, l'angle (α) est compris entre 60° et 75°.

10. Piston selon une des revendications 7 à 9, **caractérisé en ce que** l'angle, que définit l'arête de commande (20) avec la direction axiale, varie dans la direction circonférentielle.

11. Cylindre d'un moteur à combustion interne,
comportant une chemise de cylindre (11),
comportant un piston (10) pouvant monter et descendre dans la chemise de cylindre (11),
**caractérisé en ce que**
le piston (10) est conçu selon une quelconque des revendications 1 à 10.
